# EUROPÄISCHE PATENTSCHRIFT

(11) **EP 2 316 159 B1**
(45) Veröffentlichungstag und Bekanntmachung des Hinweises auf die Patenterteilung: **26.12.2018**
(21) Anmeldenummer: 09781023.8
(22) Anmeldetag: 24.07.2009
(51) Int. Cl.: H02M 1/36

(54) **DC/DC-Wandler**
DC/DC CONVERTER
CONVERTISSEUR CC/CC

(30) Priorität: 19.08.2008 DE 102008041341
(43) Veröffentlichungstag der Anmeldung: 04.05.2011
(73) Patentinhaber: Robert Bosch GmbH, 70442 Stuttgart (DE)
(72) Erfinder: WENGER, Christoph, 70825 Korntal-Muenchingen (DE); MALUCK, Christof, 75446 Wiernsheim (DE); GEIGER, Albert, 71735 Eberdingen (DE)
(86) Internationale Anmeldenummer: PCT/EP2009/059547
(87) Internationale Veröffentlichungsnummer: WO 2010/020519

(56) Entgegenhaltungen:
- EP-A2- 1 659 678
- US-A- 1 600 337
- US-A1- 2003 098 678
- US-A1- 2004 078 662

## Beschreibung

### Technisches Gebiet

Die Erfindung betrifft DC/DC-Wandler, insbesondere DC/DC-Wandler, die Kondensatoren aufweisen, die permanent mit der Versorgungsspannung des Wandlers verbunden sind.

### Stand der Technik

Ein geschalteter DC/DC-Wandler für den Einsatz im Automotiv-Bereich kann mit einer Speicherinduktivität aufgebaut sein, die gemäß einer Ansteuerung, wie z.B. einem Pulsweitenmodulationssignal, zwischen einem Versorgungspotenzial und einem Massepotenzial durch einen masseschaltenden Schalter kurzgeschlossen wird. Nach Auftrennen des Kurzschlusses bewirkt die aufgeladene Speicherinduktivität einen Stromfluss in einen Ausgangskondensator, der eine Ausgangsspannung bereitstellt. Abhängig von dem Tastverhältnis des Pulsweitenmodulationssignals, mit dem der masseschaltende Schalter angesteuert wird, kann die Höhe der Ausgangsspannung eingestellt werden.

Zur Verbesserung der EMV vor allem zur Verringerung der leitungsgebundenen Emission auf die Versorgungsspannungsleitungen und die Ausgangsleitungen sind im Allgemeinen jeweils LC-Filter notwendig. Sowohl der Ausgangskondensator als auch die Kapazitäten der eingangsseitigen und ausgangsseitigen LC-Filter sind mit der Versorgungsspannung bzw. der Ausgangsspannung verbunden, so dass diese die Störgrößen, d.h Änderungen des Versorgungsspannungspegels von dem hohen Versorgungspotenzial an das Massepotenzial ableiten. Dies hat bei Verwendung von Elektrolytkondensatoren den Nachteil, dass aufgrund der dauernden direkten Verbindung des DC/DC-Wandlers mit dem Fahrzeugbordnetz sich hohe Effektivströme aufgrund der Welligkeit der Versorgungsspannung ergeben. Daher müssen die Elektrolytkondensatoren auf diese hohen Effektivströme ausgelegt werden, was den Einsatz teurerer Kondensatoren erfordert.

Keramikkondensatoren, die anstelle von Elektrolytkondensatoren verwendet werden können, können im Fehlerfall brechen. Diese Keramikbrüche führen zu Kurzschlüssen zwischen Schichten der Keramikkondensatoren, wodurch Fehlerströme und Verlustleistungen in den Kondensatoren auftreten können.

Da bei herkömmlichen DC/DC-Wandlern die Kondensatoren in der Regel zwischen dem hohen Versorgungspotenzial und dem Massepotenzial angeordnet sind, können dadurch insgesamt permanent Stromflüsse entstehen, die sich nachteilig auf die verwendeten Bauelemente des DC/DC-Wandlers auswirken und das Versorgungsnetz, im Falle eines Kraftfahrzeugs das Bordnetz, unnötig belasten.

Aus der US-A-2004/078662 ist bereits ein DC/DC-Wandler zum Bereitstellen einer Ausgangsspannung bekannt, welcher einen geschalteten Gleichspannungswandler besitzt. Über einen Versorgungsspannungseingang wird dem Gleichspannungswandler ein erstes Versorgungspotenzial und ein zweites Versorgungspotenzial bereitgestellt. Der Masseanschluss 84 ist mit dem zweiten Versorgungspotenzial abhängig von einem Aktivierungszustand des Gleichspannungswandlers verbindbar. Eine Ausgangskapazität ist mit einem Ausgangsanschluss und dem Potenzialpunkt Masse verbunden, wobei die Ausgangskapazität durch Aktivieren des Gleichspannungswandlers auf die Ausgangsspannung aufladbar ist und an der ein Ausgangspotenzial abgreifbar ist, wobei die Ausgangsspannung zwischen dem Ausgangspotenzial und dem zweiten Versorgungspotenzial bereitgestellt wird.

Eine gattungsgemäße Vorrichtung ist aus der EP 1659678A2 bekannt. So umfasst der DC/DC-Wandler eine mit dem Ausgangsanschluss verbundene Ausgangskapazität, die bei einer Aktivierung auf eine Ausgangsspannung aufladbar ist und an der ein Ausgangspotenzial abgreifbar ist, wobei die Ausgangsspannung zwischen dem Ausgangspotenzial und dem zweiten Versorgungspotenzial bereitgestellt wird.

Es ist Aufgabe der vorliegenden Erfindung, einen geschalteten DC/DC-Wandler zur Verfügung zu stellen, bei dem parasitäre Stromflüsse weitgehend vermieden werden können, insbesondere wenn der DC/DC-Wandler nicht zum Bereitstellen einer Ausgangsspannung aktiv angesteuert wird.

### Offenbarung der Erfindung

Diese Aufgabe wird durch den Spannungswandler gemäß Anspruch 1 gelöst.

Weitere vorteilhafte Ausgestaltungen der Erfindung sind in den abhängigen Ansprüchen angegeben.

Gemäß einem ersten Aspekt ist ein DC/DC-Wandler zum Bereitstellen einer Ausgangsspannung vorgesehen. Der DC/DC-Wandler umfasst:
- einen geschalteten Gleichspannungswandler;
- einen Versorgungsspannungseingang, um dem Gleichspannungswandler ein erstes Versorgungspotenzial und ein zweites Versorgungspotenzial bereitzustellen;
- ein Potenzialpunkt, der mit dem zweiten Versorgungspotenzial abhängig von einem Aktivierungszustand des Gleichspannungswandlers verbindbar ist;
- eine mit einem Ausgangsanschluss und dem Potenzialpunkt verbundene Ausgangskapazität, die durch ein Aktivieren des Gleichspannungswandlers auf die Ausgangsspannung aufladbar ist, und an der ein Ausgangspotenzial abgreifbar ist, wobei die Ausgangsspannung zwischen dem Ausgangspotenzial und dem zweiten Versorgungspotenzial bereitgestellt wird.

Eine Idee des obigen Gleichspannungswandlers besteht darin, das zweite Versorgungspotenzial, z.B. ein Massepotenzial, von dem Potenzialpunkt zu trennen, wenn sich der Gleichspannungswandler im ausgeschalteten Zustand befindet. Erst bei Aktivierung des Gleichspannungswandlers zur Erzeugung einer Ausgangsspannung wird der Potenzialpunkt des Gleichspannungswandlers, mit dem die Ausgangskapazität und eventuell weitere Kondensatoren in dem Gleichspannungswandler verbunden sind, mit dem Versorgungsmassepotenzial verbunden. Auf diese Weise kann im ausgeschalteten Zustand des Gleichspannungswandlers vermieden werden, dass parasitäre Ströme, z.B. aufgrund von Welligkeiten in den Versorgungsspannungen bzw. aufgrund von Kurzschlüssen oder Kriechstrompfaden innerhalb der Kapazitäten zu Stromflüssen innerhalb des Gleichspannungswandlers und somit zu Belastungen oder Störungen des Versorgungsspannungsnetzes führen. Erfinderungsgemäß ist der Potenzialpunkt über einen Schalter, wie z.B. einen Halbleiterschalter oder ein mechanisches Relais, mit dem zweiten Versorgungspotenzial verbunden sein, so dass abhängig von dem Schaltzustand des Schalters das zweite Versorgungspotenzial an den Potenzialpunkt angelegt ist oder der Potenzialpunkt floatend ist bzw. eine definiert hochohmige Verbindung zum zweiten Versorgungspotential aufweist.

Weiterhin ist Steuereinheit vorgesehen, um ein Ansteuersignal für den Gleichspannungswandler zu generieren, womit dieser zur Erzeugung der Ausgangsspannung aktiviert wird. Erfindungsgemäß ist eine Steuereinheit vorgesehen sein, die mit einer Fehlerstromerfassungseinheit verbunden ist, um im deaktivierten Zustand des Gleichspannungswandlers eine Angabe eines Fehlerstroms über den Potenzialpunkt zu erfassen und um abhängig von der Angabe des Fehlerstroms ein Aktivieren des Gleichspannungswandlers durchzuführen.

Weiterhin können ein oder mehrere Filterkondensatoren vorgesehen sein, die eingangsseitig und/oder ausgangsseitig an dem Gleichspannungswandler und mit dem Potenzialpunkt verbunden sind.

Die Steuereinheit kann mit dem Schalter verbunden sein, um ein Aktivierungssignal bereitzustellen, das angibt, dass der Gleichspannungswandler innerhalb einer Zeitdauer aktiviert wird.

Gemäß einer Ausführungsform kann eine Verpolschutzeinheit vorgesehen sein, die mit dem Schalter verbunden ist, um dem Schalter das zweite Versorgungspotenzial abhängig von dem Vorzeichen des Verhältnisses des ersten und des zweiten Versorgungspotenzials bereitzustellen.

Weiterhin kann der Gleichspannungswandler einen Gleichstrompfad aufweisen, der im inaktiven Zustand des Gleichspannungswandlers einen Gleichstromfluss von dem ersten Versorgungspotenzial zu dem Ausgangsanschluss zulässt. Mit anderen Worten der Gleichspannungswandler weist keine galvanisch trennenden elektrischen Bauelemente zwischen dem ersten Versorgungspotenzial und dem Ausgangsanschluss auf. Dies ermöglicht ein Betreiben eines elektrischen Geräts mit der Versorgungsspannung, auch wenn der Gleichspannungswandler inaktiv ist, d.h. nicht von der Steuereinheit angesteuert wird.

Gemäß einem weiteren Aspekt ist eine Verwendung des obigen DC/DC-Wandlers in einem Kraftfahrzeug mit einem Verbraucher, insbesondere einem Anlasser für einen Verbrennungsmotor, und einem elektrisch betreibbaren Gerät vorgesehen, wobei die Steuereinheit den DC/DC-Wandler ansteuert, den Potenzialpunkt mit dem zweiten Versorgungspotenzial zu verbinden, wenn ein Einschalten des Verbrauchers unmittelbar bevorsteht.

### Kurzbeschreibung der Zeichnungen

Bevorzugte Ausführungsformen der Erfindung werden nachfolgend anhand der beigefügten Zeichnungen näher erläutert. Es zeigen:
Fig. 1 eine schematische Darstellung eines Kraftfahrzeugs mit einem Start-Stopp-System und einem über einen DC/DC-Wandler betriebenes Gerät; und
Fig. 2 eine schematische Darstellung eines Schaltungsaufbaus des DC/DC-Wandlers mit einer Abschaltmöglichkeit für das Massepotenzial des DC/DC-Wandlers.

### Beschreibung von Ausführungsformen

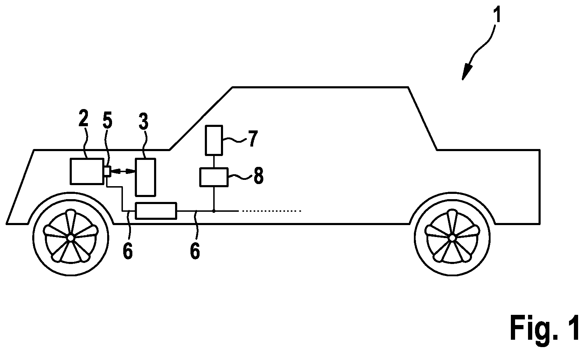

Fig. 1 zeigt ein Kraftfahrzeug 1 mit einem Verbrennungsmotor 2. Der Verbrennungsmotor 2 wird in herkömmlicher Weise betrieben. Weiterhin ist eine Motor-Start-Stopp-Einheit 3 vorgesehen, um ein Motormanagement durchzuführen, bei dem der Verbrennungsmotor 2 je nach Fahrbetrieb abgeschaltet und wieder eingeschaltet wird. Das Einschalten des Verbrennungsmotors 2 erfolgt durch Aktivieren eines Anlassers 4, der über eine Batterie 5 betrieben wird. Die Batterie 5 steht mit dem Anlasser 4 über das Bordnetz 6 in Verbindung.

Insbesondere beim Wiederanlassen des Verbrennungsmotors 2 kommt es zu erheblichen Spannungseinbrüchen im Bordnetz 6. Vor allem empfindliche elektronische Geräte, wie z.B. ein Infotainment-Gerät 7, wie z.B. ein Navigationssystem und dgl., die permanent auch während des Wiederanlassens des Verbrennungsmotors 2 in Betrieb bleiben sollen, müssen daher über einen gesteuerten DC/DC-Wandler 8 versorgt werden. Es wird also mit Hilfe des DC/DC-Wandlers 8 sichergestellt, dass während eines Anlassens des Verbrennungsmotors 2 Anwendungen, die empfindlich auf Spannungsschwankungen der Versorgungsspannung reagieren, während des Startvorgangs in einem abgesicherten Bordnetz betrieben werden können, d.h. in einem Teil des Bordnetzes, der gegenüber Spannungseinbrüchen, wie sie beim Aktivieren des Anlassers auftreten können, geschützt ist.

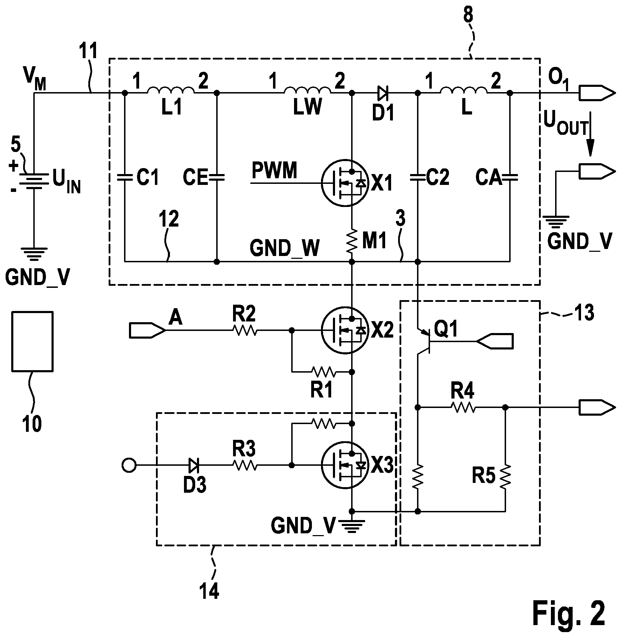

In Fig. 2 ist ein solcher DC/DC-Wandler 8 dargestellt, dem eine Eingangsspannung Uᵢₙ aus einer Spannungsquelle, wie z.B. der Batterie 5 in dem Fahrzeug 1 über das Bordnetz 6, bereitgestellt wird. Die Eingangsspannung Uᵢₙ liegt zwischen einem über eine Versorgungspotenzialleitung 11 angelegtes hohes Versorgungspotenzial V_{M} und einem Versorgungsmassepotenzial GND_V an.

Das hohe Versorgungspotenzial V_{M} wird in einem Eingangs-LC-Filter, der einen ersten Kondensator C1 und eine erste Spule L1 aufweist, gefiltert. Der erste Kondensator C1 ist mit einem ersten Anschluss mit der Versorgungspotenzialleitung 11, die das hohe Versorgungspotenzial V_{M} trägt, und mit einem zweiten Anschluss mit einem Wandler-Massepotenzial GND_W auf einer Wandler-Massepotenzialleitung 12 verbunden. Die erste Spule L1 ist mit einem ersten Anschluss mit der Versorgungspotenzialleitung 11 und mit einem zweiten Anschluss mit einem Eingangskondensator CE und mit einem ersten Anschluss einer Wandlerspule LW verbunden. Ein zweiter Anschluss des Eingangskondensators CE ist mit dem Wandler-Massepotenzial GND_W verbunden.

Ein zweiter Anschluss der Wandler-Spule LW ist mit einem ersten Anschluss eines Feldeffekttransistors X1, z.B. dem Drain-Anschluss, und mit einem ersten Anschluss (Anodenanschluss) einer Freilaufdiode D1 verbunden. Ein zweiter Anschluss (Source-Anschluss) des ersten Feldeffekttransistors X1 ist direkt oder über einen Messwiderstand M1 mit dem Wandler-Massepotenzial GND_W verbunden. Ein Steueranschluss (Gate-Anschluss) des ersten Feldeffekttransistors X1 ist mit einer Steuereinheit 2 verbunden, die ein pulsweitenmoduliertes Ansteuersignal PWM an den Gate-Anschluss des ersten Feldeffekttransistors X1 ausgibt, um abhängig von dem Strom durch den ersten FeldeffekttransistorX1 , der z.B. mithilfe des Messwiderstandes M1 gemessen wird, das Tastverhältnis des pulsweitenmodulierten Ansteuersignals PWM so einzustellen, um die Ausgangsspannung Uₒᵤₜ des DC/DC-Wandlers auf den gewünschten Wert zu regeln.

Ein zweiter Anschluss, der Kathodenanschluss der Freilaufdiode 1, ist mit einem ersten Anschluss eines zweiten Kondensators C2 und mit einem ersten Anschluss einer zweiten Spule L2 verbunden. Ein zweiter Anschluss des zweiten Kondensators C2 ist mit dem Wandler-Massepotenzial GND_W verbunden, während ein zweiter Anschluss der zweiten Spule L2 mit dem Ausgang des DC/DC-Wandlers und mit einem ersten Anschluss eines Ausgangskondensators CA verbunden. Ein zweiter Anschluss des Ausgangskondensators CA ist mit dem Wandler-Massepotenzial GND_W verbunden.

Man erkennt, dass die DC/DC-Wandlerschaltung Kondensatoren aufweist, die zwischen dem hohen Versorgungspotenzial V_{M} und dem Wandler-Massepotenzial GND_W angeschlossen sind. Bei Welligkeiten in der Versorgungsspannung, wie sie z.B. durch den Generator bei entsprechenden Lastverhältnissen im Bordnetz verursacht werden können, fließt durch die Kondensatoren ein Strom, der zu einer zusätzlichen Belastung des Bordnetzes 6, über das die Versorgungsspannung bereitgestellt wird, führt. Weiterhin können Kurzschlüsse innerhalb der Kondensatoren C1, CW, C2, CA zu parasitären Strömen und einer weiteren Belastung des Bordnetzes 6 führen.

Um eine derartige Belastung zumindest im ausgeschalteten Zustand des DC/DC-Wandlers 1 zu vermeiden, weist die DC/DC-Wandlerschaltung ein von dem Versorgungs-Massepotenzial GND_V des Bordnetzes 6 separiertes Wandler-Massepotenzial GND_W auf, das nur dann im DC/DC-Wandler bereitgestellt wird, wenn dieser aktiviert ist, d.h. wenn der erste Feldeffekttransistor X1 gemäß einem pulsweitenmodulierten Ansteuersignal PWM angesteuert wird, um eine Ausgangsspannung Uₒᵤₜ bereitzustellen. Ist der erste Feldeffekttransistor ausgeschaltet, so liegt im Idealfall kein Potenzial an der Wandler-Massepotenzialleitung 12 an, d.h. die Wandler-Massepotenzialleitung 12 ist floatend. In der Praxis hat die Verbindung zwischen Potenzial GND_W und Potenzial GND_V bei einem gesperrtem Feldeffekttransistor einen definiert hohen Widerstand und verhindert damit eine unzulässige Belastung von Bordnetz und Steuergerät.

Das Wandler-Massepotenzial GND_W wird im Wesentlichen mithilfe eines zweiten Feldeffekttransistors X2 bereitgestellt. Dabei ist ein erster Anschluss (Drain-Anschluss) des zweiten Feldeffekttransistors X2 mit dem Wandler-Massepotenzial GND_W verbunden, während ein zweiter Anschluss (Source-Anschluss) des zweiten Feldeffekttransistors X2 über einen dritten Feldeffekttransistor X3 mit dem Versorgungsmassepotenzial GND verbindbar ist. Der zweite Anschluss des zweiten Feldeffekttransistors X2 ist über einen ersten Widerstand R1 mit einem Steueranschluss (Gate-Anschluss) des zweiten Feldeffekttransistors X2 verbunden. Der Steueranschluss (Gate-Anschluss) ist weiterhin über einen zweiten Widerstand R2 mit Aktivierungssignal-Anschluss verbunden, über den ein Aktivierungssignal A empfangen werden kann. Das Aktivierungssignal A gibt an, wenn der DC/DC-Wandler eingeschaltet werden soll. Ein derartiges Aktivierungssignal wird beispielsweise unmittelbar vor dem Starten des Anlassers 5 mitgeteilt, z.B. einen bestimmten Zeitdauer, wie z.B. 15 ms vor dem Starten des Anlassers 5. Dies ermöglicht das Verbinden des Versorgungs-Massepotenzials GND_V an die Wandler-Massepotenzialleitung 12 über den durchgeschalteten zweiten Feldeffekttransistor X2, um dem DC/DC-Wandler über die Wandler-Massepotenzialleitung 12 das Wandler-Massepotenzial GND_W und somit die Batteriespannung Uᵢₙ zur Verfügung zu stellen.

Der zweite Anschluss des zweiten Feldeffekttransistors X2 ist über einen ersten Anschluss (Source-Anschluss) des dritten Feldeffekttransistor X3 mit dem Versorgungs-Massepotenzial GND_V, das an den zweiten Anschluss (Drain-Anschluss) des dritten Feldeffekttransistor X3 angelegt ist, verbunden. An dem Steueranschluss (Gate-Anschluss) des dritten Feldeffekttransistors X3 liegt über eine zweite Diode D2 und einen dritten Widerstand R3 eine interne von der Batteriespannung abhängige Spannung an, die größer ist als das Versorgungsmassepotenzial GND_V, um den dritten Feldeffekttransistor X3 durchzuschalten, wenn der zweite Anschluss des dritten Feldeffekttransistors X3 auf einem Massepotenzial liegt. Die zweite Diode D2 und der dritte Feldeffekttransistor X3 stellen eine Verpolschutzeinheit 14 zum Schutz der gesamten Schaltung vor einem Verpolen der Batterie dar und dient somit einem Verpolschutz. Wird im Verpolungsfall das hohe Versorgungspotenzial V_{M} mit dem Versorgungs-Massepotenzial GND_V verbunden und das Versorgungs-Massepotenzial GND_V auf ein hohes Potenzial gelegt, so sperrt der dritte Feldeffekttransistor X3, und der zweite Feldeffekttransistor X2 kann das Versorgungs-Massepotenzial nicht an die Wandler-Massepotenzialleitung 12 durchschalten.

Weiterhin ist ein Fehlerstromdetektor 13 vorgesehen, bei dem die Wandler-Massepotenzialleitung 3 über einen Transistor Q1 und einen Spannungsteiler aus einem vierten Widerstand R4 und einem fünften Widerstand R5 aufweist. Vor Beginn des Aktivierens des zweiten Feldeffekttransistors X2 mithilfe des Aktivierungssignals A wird mithilfe des Fehlerstromdetektors 6 festgestellt, ob die Kondensatoren C1, CE, C2, CA eine ausreichende Isolation zwischen dem hohen Versorgungspotenzial V_{M} und dem Versorgungsmassepotenzial GND_V bereitstellen. Erst wenn der Fehlerstrom einen bestimmten Schwellwert nicht übersteigt, stellt die Steuereinheit 10 das Aktivierungssignal A dem zweiten Feldeffekttransistor X2 zur Verfügung, um das Wandler-Massepotenzial GND_W mit dem Versorgungsmassepotenzial GND_V zu verbinden. Der Wert des Fehlerstroms wird durch Abgriff einer Spannung an dem durch die im vierten und fünften Widerstand R4, R5 gebildeten Spannungsteiler durch die Steuereinheit 10 detektiert.

Das Vorsehen eines abschaltbaren Wandler-Massepotenzials GND_W des DC/DC-Wandlers 8 ermöglicht es, ein geschütztes Wandler-Massepotenzial GND_W zu erzeugen, von dem alle Kondensatoren C1, CE, C2, CA des DC/DC-Wandlers 8 angeschlossen sind. Bei gesperrtem Feldeffekttransistor X2 wird damit eine Effektivstrombelastung bzw. Fehlerströme durch defekte Kondensatoren oder Schwankungen auf den Versorgungsspannungen des Bordnetzes vermieden, wenn der DC/DC-Wandler 8 nicht aktiviert ist. Kurz bevor der DC/DC-Wandler aktiviert wird, wird der zweite Feldeffekttransistor X2 eingeschaltet, wobei das Wandler-Massepotenzial GND_W möglichst niederohmig mit dem Versorgungsmassepotenzial GND_V verbunden wird.

Die Abschaltung des Wandler-Massepotenzialpfades (durch die Feldeffekttransistoren X2 und X3) ist vor allem vorteilhaft, wenn die Zeiten, während denen der DC/DC-Wandler 8 aktiv ist, im Bereich weniger Sekunden liegt, wie dies beispielsweise bei Start-Stopp-Anwendungen der Fall ist. In diesen kurzen Zeiten führen höhere Effektivströme nur zu geringer Erwärmung von Kondensatoren. Auch kann bei Auftreten eines Fehlers an den Keramikkondensatoren, der einen niederohmigeren Kurzschluss aufgrund von Metallmigration bewirkt, durch ein kurzzeitiges Einschalten des zweiten Feldeffekttransistors X2 nicht sofort zu thermischer Überlastung führen.

Es ist nicht notwendig, dass dem DC/DC Wandler 8 ein Einschalten eines Verbrauchers über ein Aktivierungssignal mit zeitlichem Vorlauf mitgeteilt wird. Es könnte auch eine Detektionseinheit vorgesehen sein, die einen Spannungseinbruch im Bordnetz detektiert und ein entsprechendes Aktivierungssignal generiert, so dass bei einem Spannungseinbruch der DC/DC-Wandler eingeschaltet wird. Dabei ist ein Spannungseinbruch nicht zu vermeiden. Dieser ist aber zeitlich begrenzt.

## Patentansprüche

1. DC/DC-Wandler (8) zum Bereitstellen einer Ausgangsspannung (Uₒᵤₜ), umfassend:
- einen geschalteten Gleichspannungswandler (LW, X1, D1);
- einen Versorgungsspannungseingang, um dem Gleichspannungswandler (LW, X1) ein erstes Versorgungspotenzial (V_{M}) und ein zweites Versorgungspotenzial (GND_V) bereitzustellen;
- ein Potenzialpunkt (12), der mit dem zweiten Versorgungspotenzial (GND_V) abhängig von einem Aktivierungszustand des Gleichspannungswandlers (LW, X1, D1) verbindbar ist;
- eine mit einem Ausgangsanschluss und dem Potenzialpunkt (12) verbundene Ausgangskapazität (CA), die durch ein Aktivieren des Gleichspannungswandlers (LW, X1) auf die Ausgangsspannung (Uₒᵤₜ) aufladbar ist, und an der ein Ausgangspotenzial abgreifbar ist, wobei die Ausgangsspannung (Uₒᵤₜ) zwischen dem Ausgangspotenzial und dem zweiten Versorgungspotenzial (GND_V) bereitgestellt wird,
- ein Schalter (X2);
- eine mit dem Potenzialpunkt (12) verbundene Fehlerstromerfassungseinheit (13); wobei der Potenzialpunkt (12) über den Schalter (X2) mit dem zweiten Versorgungspotenzial (GND_V) verbunden ist, so dass abhängig von dem Schaltzustand des Schalters (X2) das zweite Versorgungspotenzial (GND_V) an den Potenzialpunkt (12) angelegt ist oder der Potenzialpunkt (12) floatend ist bzw. einen definiert hochohmige Verbindung zum zweiten Versorgungspotential (GND_V) aufweist und wobei eine Steuereinheit (10) vorgesehen ist, um ein Ansteuersignal für den Gleichspannungswandler (LW, X1, D1) zu generieren, womit dieser zur Erzeugung der Ausgangsspannung (Uₒᵤₜ) aktiviert wird, wobei die Steuereinheit (10) mit der Fehlerstromerfassungseinheit (13) verbunden ist, um im deaktivierten Zustand des Gleichspannungswandlers (LW, X1, D1) eine Angabe eines Fehlerstroms über den Potenzialpunkt (12) zu erfassen und um abhängig von der Angabe des Fehlerstroms ein Aktivieren des Gleichspannungswandlers (LW, X1, D1) durchzuführen.

2. DC/DC-Wandler (8) nach Anspruch 1, wobei ein oder mehrere Filterkondensatoren (C1, C2) vorgesehen sind, die eingangsseitig und/oder ausgangsseitig an dem Gleichspannungswandler (LW, X1, D1) und mit dem Potenzialpunkt (12) verbunden sind.

3. DC/DC-Wandler (8) nach Anspruch 1, wobei die Steuereinheit (10) mit dem Schalter (X2) verbunden ist, um ein Aktivierungssignal (A) bereitzustellen, das angibt, dass der Gleichspannungswandler (LW, X1, D1) innerhalb einer Zeitdauer aktiviert wird.

4. DC/DC-Wandler (8) nach einem der Ansprüche 1 bis 3, wobei eine Verpolschutzeinheit (14) vorgesehen ist, die mit dem Schalter (X2) verbunden ist, um dem Schalter (X2) das zweite Versorgungspotenzial (GND_V) abhängig von dem Vorzeichen des Verhältnisses des ersten (V_{M}) und des zweiten Versorgungspotenzials (GND_V) bereitzustellen.

5. DC/DC-Wandler (8) nach einem der Ansprüche 1 bis 4, wobei der Gleichspannungswandler (LW, X1, D1) einen Gleichstrompfad aufweist, der im inaktiven Zustand des Gleichspannungswandlers (LW, X1, D1) einen Gleichstromfluss von dem ersten Versorgungspotenzial (V_{M}) zu dem Ausgangsanschluss zulässt.

6. Verwendung eines DC/DC-Wandlers (8) nach einem der Ansprüche 1 bis 5 in einem Kraftfahrzeug mit einem Verbraucher, insbesondere einem Anlasser für einen Verbrennungsmotor, und einem elektrisch betreibbaren Gerät, wobei die Steuereinheit den DC/DC-Wandler (8) ansteuert, den Potenzialpunkt mit dem zweiten Versorgungspotenzial (GND_V) zu verbinden, wenn ein Einschalten des Verbrauchers unmittelbar bevorsteht.

## Claims

1. DC/DC converter (8) for providing an output voltage (Uₒᵤₜ), comprising:
- a switched DC voltage converter (LW, X1, D1);
- a supply voltage input in order to provide a first supply potential (V_{M}) and a second supply potential (GND_V) to the DC voltage converter (LW, X1);
- a potential point (12), which can be connected to the second supply potential (GND_V) depending on an activation state of the DC voltage converter (LW, X1, D1);
- an output capacitance (CA), which is connected to an output connection and the potential point (12), which output capacitance can be charged to the output voltage (Uₒᵤₜ) by way of activation of the DC voltage converter (LW, X1) and at which output capacitance an output potential can be tapped, wherein the output voltage (Uₒᵤₜ) is provided between the output potential and the second supply potential (GND_V),
- a switch (X2);
- a residual current detection unit (13) connected to the potential point (12);
wherein the potential point (12) is connected to the second supply potential (GND_V) by means of the switch (X2) so that, depending on the switching state of the switch (X2), the second supply potential (GND_V) is applied to the potential point (12) or the potential point (12) is floating or has a connection with defined high impedance to the second supply potential (GND_V) and wherein a control unit (10) is provided in order to generate an actuation signal for the DC voltage converter (LW, X1, D1), whereby said DC voltage converter is activated to generate the output voltage (Uₒᵤₜ), wherein the control unit (10) is connected to the residual current detection unit (13) in order, in the deactivated state of the DC voltage converter (LW, X1, D1), to detect an indication of a residual current across the potential point (12) and in order to carry out activation of the DC voltage converter (LW, X1, D1) depending on the indication of the residual current.

2. DC/DC converter (8) according to Claim 1, wherein one or more filter capacitors (C1, C2) are provided, which are connected on the input side and/or on the output side to the DC voltage converter (LW, X1, D1) and to the potential point (12).

3. DC/DC converter (8) according to Claim 1, wherein the control unit (10) is connected to the switch (X2) in order to provide an activation signal (A), which specifies that the DC voltage converter (LW, X1, D1) is activated within a time period.

4. DC/DC converter (8) according to one of Claims 1 to 3, wherein a polarity-reversal protection unit (14) is provided, which is connected to the switch (X2) in order to provide the second supply potential (GND_V) to the switch (X2) depending on the sign of the ratio between the first (V_{M}) and the second supply potential (GND_V).

5. DC/DC converter (8) according to one of Claims 1 to 4, wherein the DC voltage converter (LW, X1, D1) has a DC path, which, in the active state of the DC voltage converter (LW, X1, D1), permits a flow of direct current from the first supply potential (V_{M}) to the output connection.

6. Use of a DC/DC converter (8) according to one of Claims 1 to 5 in a motor vehicle having a load, in particular a starter for an internal combustion engine, and an electrically operable device, wherein the control unit actuates the DC/DC converter (8) to connect the potential point to the second supply potential (GND_V) when switch-on of the load is immediately imminent.

## Revendications

1. Convertisseur CC/CC (8) permettant de fournir une tension de sortie (Uₒᵤₜ) et comportant :
- un convertisseur de tension continue commuté (LW, X1, D1) ;
- une entrée de tension d'alimentation destinée à fournir un premier potentiel d'alimentation (V_{M}) et un deuxième potentiel d'alimentation (GND_V) au convertisseur de tension continue (LW, X1) ;
- un point de potentiel (12) qui peut être relié au deuxième potentiel d'alimentation (GND_V) en fonction d'un état d'activation du convertisseur de tension continue (LW, X1, D1) ;
- une capacité de sortie (CA) reliée à une borne de sortie et au point de potentiel (12), qui peut être chargée à la tension de sortie (Uₒᵤₜ) par le biais du convertisseur de tension continue (LW, X1), et sur laquelle un potentiel de sortie peut être prélevé, dans lequel la tension de sortie (Uₒᵤₜ) est fournie entre le potentiel de sortie et le deuxième potentiel d'alimentation (GND_V),
- un commutateur (X2) ;
- une unité de détection de courant de défaut (13) reliée au point de potentiel (12) ;
dans lequel le point de potentiel (12) est relié au deuxième potentiel d'alimentation (GND_V) par l'intermédiaire du commutateur (X2), de manière à ce que le deuxième potentiel d'alimentation (GND_V) soit appliqué au point de potentiel (12) en fonction de l'état de commutation du commutateur (X2), ou que le point de potentiel (12) soit flottant ou présente une liaison à haute impédance définie au deuxième potentiel d'alimentation (GND_V), et dans lequel il est prévu une unité de commande (10) destinée à générer un signal de commande pour le convertisseur CC/CC (LW, X1, D1), au moyen de laquelle ce dernier est activé pour générer la tension de sortie (Uₒᵤₜ), dans lequel l'unité de commande (10) est reliée à l'unité de détection de courant de défaut (13) pour détecter une indication d'un courant de défaut par le biais du point de potentiel (12) à l'état désactivé du convertisseur CC/CC (LW, X1, D1) et pour effectuer une activation du convertisseur CC/CC (LW, X1, D1) en fonction de l'indication du courant de défaut.

2. Convertisseur CC/CC (8) selon la revendication 1, dans lequel il est prévu un ou plusieurs condensateurs de filtrage (C1, C2) qui est/sont relié(s) côté entrée et/ou côté sortie au convertisseur de tension continue (LW, X1, D1) et au point potentiel (12).

3. Convertisseur CC/CC (8) selon la revendication 1, dans lequel l'unité de commande (10) est reliée au commutateur (X2) pour fournir un signal d'activation (A) indiquant que le convertisseur de tension continue (LW, X1, D1) est activé pendant une certaine période.

4. Convertisseur CC/CC (8) selon l'une des revendications 1 à 3, dans lequel il est prévu une unité de protection contre l'inversion de polarité (14) reliée au commutateur (X2) destinée à fournir au commutateur (X2) le deuxième potentiel d'alimentation (GND_V) en fonction du signe du rapport du premier (V_{M}) au deuxième (GND_V) potentiel d'alimentation.

5. Convertisseur CC/CC (8) selon l'une des revendications 1 à 4, dans lequel le convertisseur CC/CC (LW, X1, D1) présente un trajet de courant continu qui, à l'état inactif du convertisseur CC/CC (LW, X1, D1), laisse passer un courant continu du premier potentiel d'alimentation (V_{M}) vers la borne de sortie.

6. Utilisation d'un convertisseur CC/CC (8) selon l'une des revendications 1 à 5 dans un véhicule automobile comportant une charge, en particulier un démarreur destiné à un moteur à combustion interne, et un appareil pouvant fonctionner électriquement, dans lequel l'unité de commande effectue une commande du convertisseur CC/CC (8) de manière à relier le point de potentiel au deuxième potentiel d'alimentation (GND_V) immédiatement avant la mise sous tension de la charge.
